(19) Europäisches Patentamt
European Patent Office
Office européen des brevets

(11) EP 3 279 717 B1

(12) EUROPEAN PATENT SPECIFICATION

(45) Date of publication and mention
of the grant of the patent:
**15.01.2020 Bulletin 2020/03**

(51) Int Cl.:
*G02B 6/12* *(2006.01)*  *G03B 21/14* *(2006.01)*
*G03B 21/28* *(2006.01)*  *B60K 35/00* *(2006.01)*
*G02B 27/01* *(2006.01)*

(21) Application number: **16832466.3**

(22) Date of filing: **08.07.2016**

(86) International application number:
**PCT/JP2016/003245**

(87) International publication number:
**WO 2017/022176 (09.02.2017 Gazette 2017/06)**

(54) **HEAD-UP DISPLAY AND MOVING BODY EQUIPPED WITH HEAD-UP DISPLAY**

HEADUP-ANZEIGE UND MIT DER HEADUP-ANZEIGE AUSGESTATTETER, BEWEGLICHER KÖRPER

AFFICHAGE TÊTE HAUTE ET CORPS MOBILE ÉQUIPÉ DUDIT AFFICHAGE TÊTE HAUTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.08.2015 JP 2015155735**

(43) Date of publication of application:
**07.02.2018 Bulletin 2018/06**

(73) Proprietor: **Panasonic Intellectual Property
Management Co., Ltd.
Osaka-shi, Osaka 540-6207 (JP)**

(72) Inventors:
• **KUZUHARA, Satoshi
Osaka 540-6207 (JP)**
• **OKAYAMA, Hiroaki
Osaka 540-6207 (JP)**

(74) Representative: **Eisenführ Speiser
Patentanwälte Rechtsanwälte PartGmbB
Postfach 10 60 78
28060 Bremen (DE)**

(56) References cited:
WO-A1-2015/102063    GB-A- 2 498 715
JP-A- H05 341 226    JP-A- H05 341 226
JP-A- 2005 206 133    JP-A- 2012 093 506
JP-A- 2013 025 205    US-A- 5 625 493
US-A1- 2009 231 698

**Description**

TECHNICAL FIELD

The present disclosure relates to a head-up display that projects an image on a transparent-type reflective member to present a virtual image.

BACKGROUND ART

In order to provide a small sized optical system obtaining a larger enlarging ratio while reducing coma aberration and astigmatism in a headup display device (HUD), it is proposed in JP H05 341 226 A that this device is provided with a display element, a first concave mirror, a second concave mirror and a cylindrical concave lens. This device is constituted so that the first concave mirror and the second concave mirror are disposed to face oppositely at a relative angle $\theta$, and the display information of the display element is made incident on the first concave mirror at an incident angle $\varphi(\theta)$ and outgone from the second concave mirror at an outgoing angle $\psi(\theta)$. The cylindrical concave lens is placed in an optical path so that the center axis of the lens becomes perpendicular to a plane containing an optical axis bended by the first concave mirror and the second concave mirror.

An image display apparatus according to US 5,624,493 A includes an image generator for generating first light having image information, and a beam combiner for superimposing the first light and second light which is incident upon the beam combiner from a direction different from that of the first light, and for guiding the superimposed light to a pupil of an observer. Also provided is a reflector positioned in a direction different from the incident direction of the second light on the beam combiner. The first light is incident upon the reflector via the beam combiner, and is reflected back to the beam combiner after being reflected by the reflector.

An in-vehicle stereoimage display apparatus according to US 2009/231698 A1 includes a display device, an erecting unit magnification lens module spaced from and facing toward a display screen of the display device for forming an erecting unit magnification stereoimage of an image displayed on the display screen, a lens movement mechanism for movably supporting the erecting unit magnification lens module, and a controller for changing the position of the erecting unit magnification lens module in accordance with the travel velocity of a vehicle. In one example, the controller increases the distance between the vehicle driver's eyes and the erecting unit magnification stereoimage as the travel velocity of the vehicle increases.

A head up display (HUD) according to GB 2 498 715 A providing vehicle system information includes a partially reflecting combiner having a first surface $S_1$ located closest to a display, and a second surface $S_2$, located furthest from the display, wherein the effective radius of curvature of surface $S_2>S_1$, so as to provide two non-coincident virtual images. The combiner may be a negative meniscus lens providing a secondary virtual image in a different colour so as to provide a warning message. The selection of antireflective coatings on the surfaces $S_2$ and $S_1$ allows the non-coincident virtual images to have different coloured virtual images. The anti-reflection coating on surface $S_1$ may have reflectance minima in a narrow wave band.

PTL 1 discloses a head-up display device that projects an image to be displayed on a windshield. The head-up display device includes a liquid crystal display, a standard light source, a concave mirror, and a concave cylindrical lens. The liquid crystal display forms a basic image to be a base of an image to be displayed. The standard light source radiates light from a rear surface side toward the liquid crystal display. The concave mirror reflects a light image of the basic image to project an image to be displayed on a windshield. The concave cylindrical lens has a concave curved surface that extends along a y-axis direction, that is curved into a concave shape in an x-axis direction, and that is facing the concave mirror. The concave cylindrical lens is positioned between the liquid crystal display and the concave mirror. Further, rotation of the concave cylindrical lens about an x axis can cause a z axis to incline with respect to optical axis OA from the standard light source toward the concave mirror.

Citation List

Patent Literature

PTL1: Unexamined Japanese Patent Publication No. 2012-093506

SUMMARY OF THE INVENTION

The present disclosure provides a head-up display that presents a virtual image having high contrast.

The head-up display of the present disclosure projects an image on a transparent reflective member to allow an observer to visually recognize a virtual image. The head-up display includes a display device and a projection optical system. The projection optical system includes a refractive optical system and a concave mirror. The display device displays the image. The projection optical system projects the image displayed on the display device to a visual point of an observer. The refractive optical system includes at least one optical element. The concave mirror has a concave reflection surface. The refractive optical system is positioned on an optical path between the display device and the concave mirror. The refractive optical system includes a lens element having negative power as a whole. The lens element having negative power has an incident surface into which light of the image displayed on the display device is incident. The incident surface has a concave surface. The head-up display satisfies a following condition (1):

$$0.5 < H / L < 10.0 \ldots (1)$$

where
H represents a length from reference outer side image end (Do) to reference inner side image end (Di), and L represents an optical path length of a reference beam from the display device to the incident surface of the lens element having negative power in the refractive optical system.

The head-up display of the present disclosure is effective for presenting a virtual image having high contrast.

BRIEF DESCRIPTION OF DRAWINGS

FIG. 1 is schematic diagram for describing a vehicle mounted with a head-up display according to a first exemplary embodiment.
FIG. 2 is a schematic diagram illustrating a configuration of the head-up display according to the first exemplary embodiment.
FIG. 3 is a schematic diagram illustrating the configuration of the head-up display according to the first exemplary embodiment.
FIG. 4 is a schematic diagram illustrating the configuration of the head-up display according to the first exemplary embodiment.
FIG. 5 is a schematic diagram illustrating a configuration of a head-up display according to a second exemplary embodiment.
FIG. 6 is a schematic diagram illustrating a configuration of a head-up display according to a third exemplary embodiment.
FIG. 7 is a diagram illustrating data of a projection optical system according to Example 1.
FIG. 8 is a diagram illustrating data of the projection optical system according to Example 1.
FIG. 9 is a diagram illustrating data of the projection optical system according to Example 1.
FIG. 10 is a diagram illustrating data of the projection optical system according to Example 1.
FIG. 11 is a diagram illustrating data of the projection optical system according to Example 1.
FIG. 12 is a diagram illustrating data of the projection optical system according to Example 1.
FIG. 13 is a diagram illustrating data of a projection optical system according to Example 2.
FIG. 14 is a diagram illustrating data of the projection optical system according to Example 2.
FIG. 15 is a diagram illustrating data of the projection optical system according to Example 2.
FIG. 16 is diagram illustrating data of the projection optical system according to Example 2.
FIG. 17 is a diagram illustrating data of a projection optical system according to Example 3.
FIG. 18 is a diagram illustrating data of the projection optical system according to Example 3.
FIG. 19 is a diagram illustrating data of the projection optical system according to Example 3.
FIG. 20 is a diagram illustrating data of the projection optical system according to Example 3.
FIG. 21 is a diagram illustrating data of a projection optical system according to Example 4.
FIG. 22 is a diagram illustrating data of the projection optical system according to Example 4.
FIG. 23 is a diagram illustrating data of the projection optical system according to Example 4.
FIG. 24 is a diagram illustrating data of the projection optical system according to Example 4.
FIG. 25 is a diagram illustrating optical data of the head-up displays according to Examples 1 to 4.

DESCRIPTION OF EMBODIMENTS

Hereinafter, exemplary embodiments will be described in detail with reference to the drawings as appropriate. However, a detailed description more than necessary may be omitted. For example, a detailed description of a well-known matter or a repetitive description of a substantially identical configuration may be omitted. Such omissions are aimed to prevent the following description from being redundant than necessary, and to help those skilled in the art easily understand the following description.

Note that the attached drawings and the following description are provided for those skilled in the art to fully understand the present disclosure, and are not intended to limit the subject matter as described in the claims.

FIRST EXEMPLARY EMBODIMENT

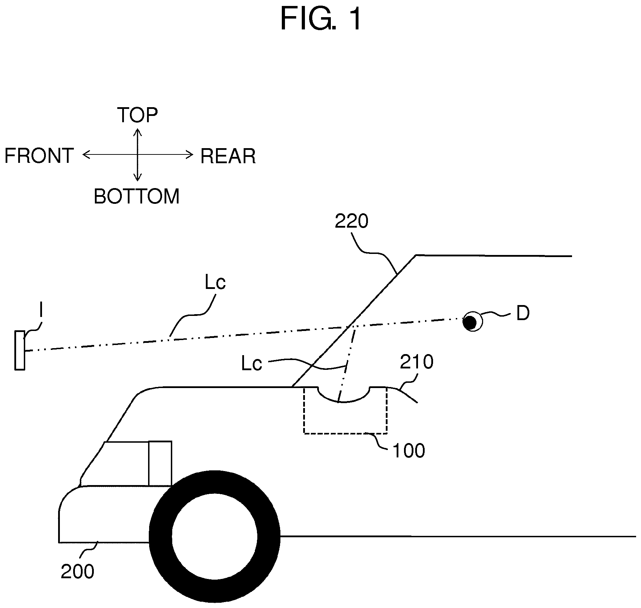

A first exemplary embodiment will be described below with reference to FIGS. 1 to 4.

[1-1. Configuration]

[1-1-1. Overall Configuration of Head-Up Display]

Specific exemplary embodiments and examples of head-up display 100 of the present disclosure will be described below with reference to the drawings.

FIG. 1 is a diagram illustrating a cross section of vehicle 200 mounted with head-up display 100 of the present disclosure. As illustrated in FIG. 1, head-up display 100 is disposed inside dashboard 210 below windshield 220 of vehicle 200. Observer D recognizes, as virtual image I, an image projected on windshield 220 by head-up display 100.

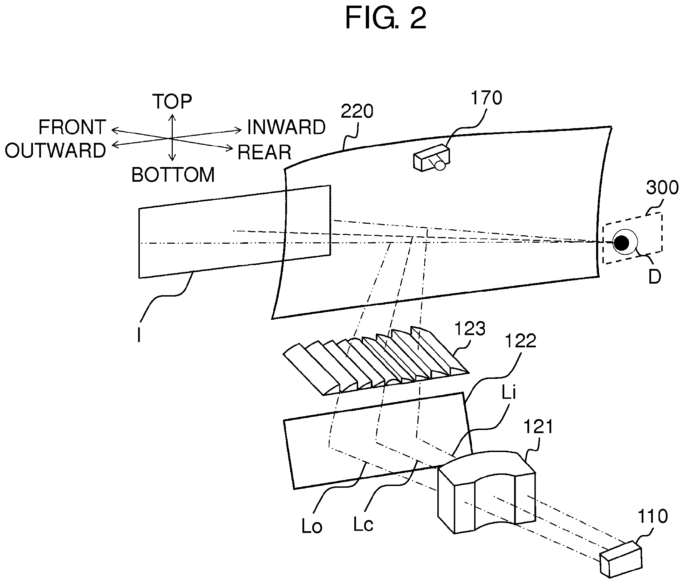

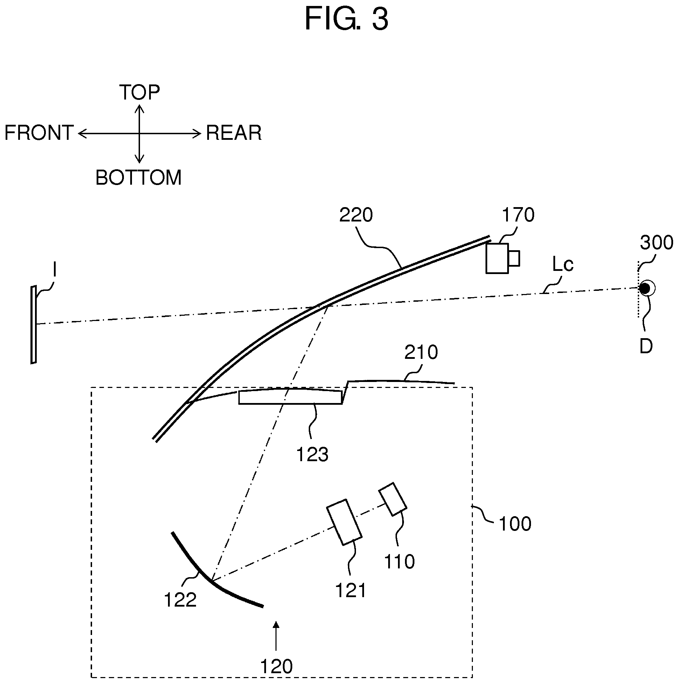

FIG. 2 is a schematic diagram illustrating a configuration of head-up display 100 according to the present exemplary embodiment. FIG. 3 is a schematic diagram for describing head-up display 100 according to the present exemplary embodiment.

As illustrated in FIGS. 2 and 3, head-up display 100 includes display device 110 and projection optical system 120. Head-up display 100 reflects image to be displayed 111 displayed by display device 110 via windshield 220, and guides image to be displayed 111 to viewpoint region 300 of observer D to allow observer D to visually recognize virtual image I. Camera 170 detects a viewpoint position of observer D.

In the present disclosure, front side refers to a direction in which the windshield of vehicle 200 is present from a viewpoint of observer D, and rear side refers to a direction opposite to forward. Further, downward refers to a direction of the ground where vehicle 200 travels, and upward refers to a direction opposite to downward. Outer side refers to a left side from a viewpoint of observer D when vehicle 200 is a left-hand drive vehicle, and inner side refers to a right side from a viewpoint of observer. Further, viewpoint region 300 is a region where observer D can visually recognize complete virtual image I.

Further, in display device 110, an optical path from a center of image to be displayed 111 to a center of virtual image I is referred to as reference beam Lc. Reference beam Lc visually recognized by observer D actually reaches observer D from display device 110 via an optical system. Accordingly, a beam from display device 110 to observer D that corresponds to reference beam Lc emitted from the center of virtual image I is also referred to as reference beam Lc. Further, an optical path corresponding to these beams is also referred to as reference beam Lc. The same holds true for reference inner side beam Li and reference outer side beam Lo which are described in the following. On display device 110, a display position corresponding to a vehicle outer side end of virtual image I is reference outer side image end Do, and a display position corresponding to a vehicle inner side end of virtual image I is reference inner side image end Di. An optical path from reference outer side image end Do to the vehicle outer side end of virtual image I is referred to as reference outer side beam Lo, and an optical path from reference inner side image end Di to the vehicle inner side end of virtual image I is referred to as reference inner side beam Li. Note that, it is assumed that the viewpoint of observer D is at the center of viewpoint region 300.

Display device 110 displays image to be displayed 111 based on control made by a controller such as a CPU (not illustrated). Examples of display device 110 to be used may include a liquid crystal display with a backlight, an organic light emitting diode (electroluminescence), and a plasma display. Further, as display device 110, image to be displayed 111 may be generated by using a screen that enables diffused reflection and a projector or a scanning laser. Image to be displayed 111 can display various pieces of information, such as road traffic navigation display, a distance to a vehicle ahead, the remaining battery charge of a vehicle, and a current vehicle speed. Further, display device 110 electronically distorts image to be displayed 111 in advance in accordance with distortion that occurs at projection optical system 120 and windshield 220, and a position of observer D that is obtained by camera 170. Thus, observer D can visually recognize excellent virtual image I. Further, display device 110 displaces the display of display pixels of a plurality of wavelengths for each display position in accordance with chromatic aberration that occurs at the projection optical system. Thus, observer D can visually recognize excellent virtual image I.

Projection optical system 120 includes first lens 121 having negative power, first mirror 122 having a concave reflection surface, second lens 123 having positive power. Projection optical system 120 projects image to be displayed 111 displayed by display device 110 on windshield 220. Specifically, image light of image to be displayed 111 displayed by display device 110 is incident to first mirror 122 via first lens 121. The image light reflected by first mirror 122 is projected on windshield 220 via second lens 123.

[1-1-2. Configuration of Projection Optical System]

A configuration of projection optical system 120 will be described below with reference to FIGS. 2 and 3.

First lens 121 is positioned on a front side of vehicle 200 with respect to display device 110, and is inclined with respect to a direction perpendicular to a display surface of display device 110. First lens 121 has a negative meniscus shape having a concave surface on a display device 110 side (incident surface) and a convex surface on a first mirror 122 side (emitting surface). The incident surface and the emitting surface of first lens 121 have power only in a right/left direction of the vehicle but do not have power in an upper/lower direction. As a result, even when external light such as sun light is reflected by first lens 121, the external light is not incident to viewpoint region 300.

First mirror 122 is positioned on a front side of vehicle 200 with respect to first lens 121, and a reflection surface of first mirror 122 is eccentrically disposed so as to reflect the beam emitted from first lens 121 toward second lens 123. The reflection surface of first mirror 122 is concave. Thus, image to be displayed 111 displayed by display device 110 can be enlarged and visually recognized as virtual image I by observer D. Further, first mirror 122 has a free-form surface. This is to correct distortion of the virtual image due to reflection, so that excellent virtual image I can be observed over the entire region of viewpoint region 300.

Second lens 123 has positive power as a whole, and an emitting surface of second lens 123 has a Fresnel shape with ridges extending linearly in the front-rear direction of vehicle 200. Further, second lens 123 is positioned to be higher than first mirror 122, and refracts a beam reflected by first mirror 122 toward windshield 220. Second lens 123 having positive power as a whole enables image to be displayed 111 displayed by display device 110 to be enlarged and visually recognized as virtual image I by observer D. Further, first mirror 122 can be reduced in size. Further, the emitting surface of second lens 123 is a free-form surface. Thus, asymmetric screen distortion that occurs at windshield 220 can be satisfactorily corrected. Further, the Fresnel shape of the emitting surface of second lens 123 enables a lens thickness of second lens 123 to be reduced, and head-up display 100 to be reduced in size.

First lens 121 is disposed to be higher than a lower end of the reflection surface of first mirror 122. This enables head-up display 100 to have a reduced thickness in the upper/lower direction of vehicle 200.

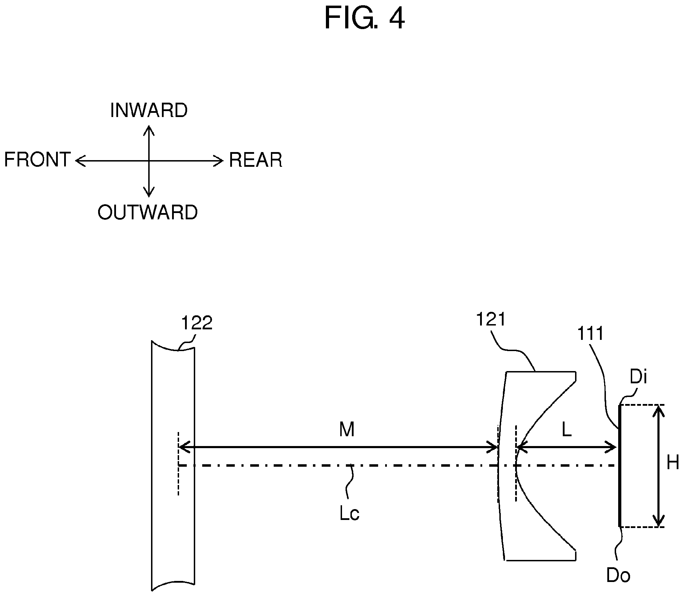

Further, as illustrated in FIG. 4, length L of reference beam Lc between image to be displayed 111 displayed on display device 110 and first lens 121 is shorter than length M of reference beam Lc between first mirror 122 and first lens 121. This suppresses the fluctuation of the amount of chromatic aberration that occurs at first lens 121 in viewpoint region 300.

[1-3. Effects and Others]

Head-up display 100 according to the first exemplary embodiment includes display device 110 that displays image to be displayed 111, and projection optical system 120 that projects image to be displayed 111 displayed on display device 110. Projection optical system 120 includes first lens 121, first mirror 122, and second lens 123 in this order from display device 110 on the optical path.

Head-up display 100 according to the first exemplary embodiment projects image to be displayed 111 displayed on display device 110 on windshield 220 to present virtual image I to observer D. Accordingly, image to be displayed 111 displayed on display device 110 can be visually recognized by observer D without obstructing a front view of observer D.

Further, use of head-up display 100 of the present disclosure can achieve a small head-up display in which image distortion is satisfactorily corrected on the entire region of viewpoint region 300. That is, observer D can visually recognize excellent virtual image I at any position in viewpoint region 300.

Since the incident surface of first lens 121 is concave toward display device 110, expansion of a beam emitted from display device 110 and incident to first lens 121 can be suppressed, which enables presenting virtual image I having excellent contrast characteristics.

Further, since first lens 121 has a negative meniscus shape having a convex emitting surface, an incident angle of a beam emitted from display device 110 to the lens surface of first lens 121 can be made small, which can reduce an influence of distortion due to eccentricity.

In projection optical system 120, first lens 121 having negative power as a whole is disposed immediately after display device 110. In other words, since the surface of first lens 121, into which light of image to be displayed 111 displayed on display device 110 is first incident, is concave, the positive power of first mirror 122 can be increased, which can reduce the size of head-up display 100.

SECOND EXEMPLARY EMBODIMENT

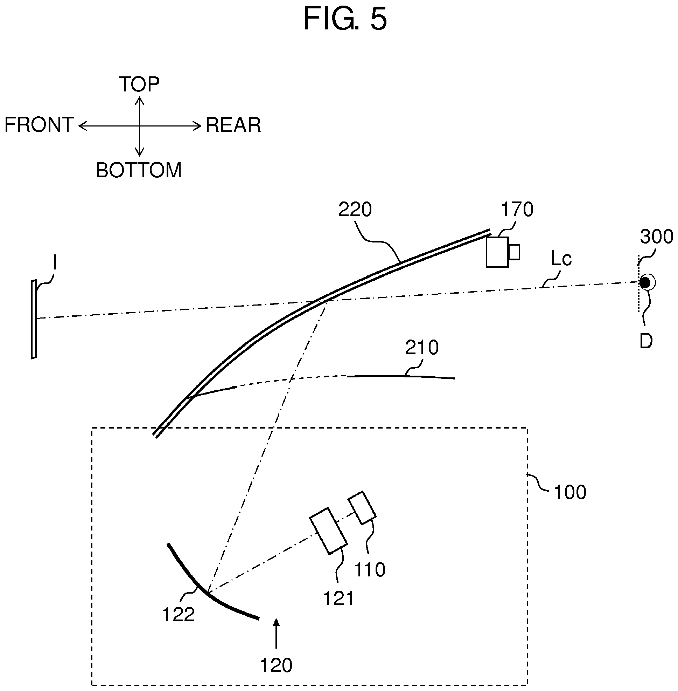

Head-up display 100 according to a second exemplary embodiment is different from head-up display 100 according to the first exemplary embodiment in that second lens 123 is not provided. Points different from the first exemplary embodiment will be mainly described below with reference to FIG. 5, and descriptions of similar parts of the configuration will be omitted.

[2-1. Configuration]

[2-1-1. Overall Configuration of Head-Up Display]

FIG. 5 is a schematic diagram for describing an optical path for describing head-up display 100 according to the second exemplary embodiment. As illustrated in FIG. 5, head-up display 100 includes display device 110 and projection optical system 120. Projection optical system 120 includes first lens 121 having negative power, and first mirror 122 having a concave reflection surface.

Projection optical system 120 projects image to be displayed 111 displayed by display device 110 on windshield 220. Specifically, image light of image to be displayed 111 displayed by display device 110 is incident to first mirror 122 via first lens 121. The image light reflected by first mirror 122 is projected on windshield 220.

First lens 121 is positioned on the front side of vehicle 200 with respect to display device 110, and is inclined with respect to a direction perpendicular to the display surface of display device 110. Further, first lens 121 has a negative meniscus shape having a concave surface on the display device 110 side and a convex emitting surface. Further, the incident surface and the emitting surface of first lens 121 have power only in the right/left direction of the vehicle but do not have power in the upper/lower direction. As a result, even when external light such as sun light is reflected by first lens 121, the external light is not incident to viewpoint region 300.

First mirror 122 is positioned on the front side of vehicle 200 with respect to first lens 121, and a reflection surface of first mirror 122 is eccentrically disposed so as to reflect a beam emitted from first lens 121 toward windshield 220. The reflection surface of first mirror 122 is concave. Thus, image to be displayed 111 displayed by display device 110 can be enlarged and visually recognized as virtual image I by observer D. Further, first mirror 122 has a free-form surface. This is to correct distortion of the virtual image due to reflection, so that excellent virtual image I can be observed over the entire region of viewpoint region 300.

In projection optical system 120, first lens 121 having negative power as a whole is disposed immediately after display device 110. A surface of first lens 121, to which light of image to be displayed 111 displayed on display device 110 is first incident, is a concave surface. Since first lens 121 has the negative power as a whole, the positive power of first mirror 122 can be increased, which can reduce the size of head-up display 100.

In the second exemplary embodiment, one first mirror 122 is disposed immediately after first lens 121, but a plurality of mirrors may be disposed.

First lens 121 is disposed to be higher than a lower end of the reflection surface of first mirror 122. This enables head-up display 100 to have a reduced thickness in the upper/lower direction of vehicle 200. Further, a length of reference beam Lc between display device 110 and first lens 121 is shorter than a length of reference beam Lc between first mirror 122 and first lens 121. This suppresses the fluctuation of the amount of chromatic aberration that occurs at first lens 121 in viewpoint region 300.

[2-2. Effects and Others]

Head-up display 100 according to the second exemplary embodiment includes display device 110 that displays image to be displayed 111, and projection optical system 120 that projects image to be displayed 111 displayed on display device 110. Projection optical system 120 has first lens 121 and first mirror 122 in this order from display device 110 on the optical path. This configuration can realize a small head-up display in which image distortion is satisfactorily corrected on the entire region of viewpoint region 300. That is, observer D can visually recognize excellent virtual image I at any position in viewpoint region 300.

Since the incident surface of first lens 121 is concave toward display device 110, expansion of a beam that is emitted from display device 110 and is incident to first lens 121 can be suppressed, which enables presenting virtual image I that is excellent in contrast characteristics.

Further, since first lens 121 has a negative meniscus shape having a convex emitting surface, an incident angle of a beam that is emitted from display device 110 to the lens surface of first lens 121 can be made small, which can reduce an influence of distortion due to eccentricity.

In projection optical system 120, first lens 121 having negative power as a whole is disposed immediately after display device 110. A surface of first lens 121, to which light of image to be displayed 111 displayed on display device 110 is first incident, is a concave surface. Since first lens 121 has the negative power as a whole, the positive power of first mirror 122 can be increased, which can reduce the size of head-up display 100. Further, since the incident surface of first lens 121 is concave, an angle formed between light incident from display device 110 and the incident surface can be enlarged. This suppresses degradation of optical characteristics caused when the incident angle is too small.

THIRD EXEMPLARY EMBODIMENT

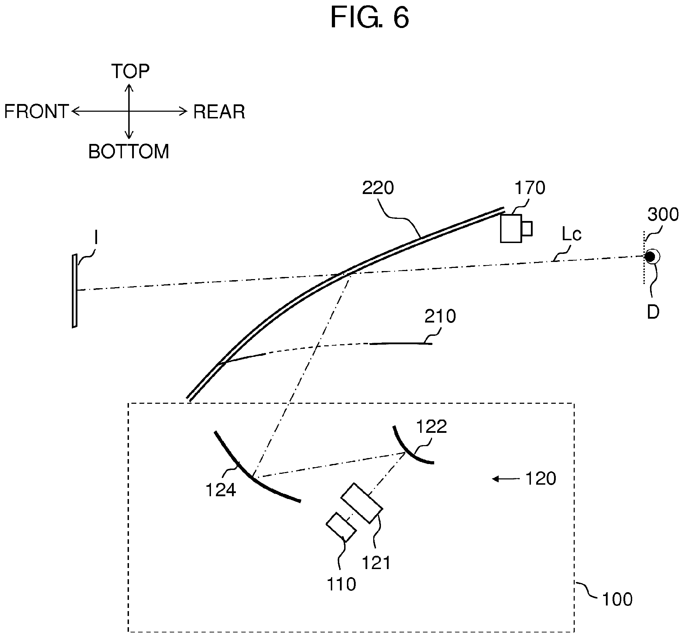

A third exemplary embodiment will be described below with reference to FIG. 6. Head-up display 100 according to the third exemplary embodiment is different from head-up display 100 according to the first exemplary embodiment in that head-up display 100 has two mirrors in projection optical system 120 but does not have second lens 123. Points different from the first exemplary embodiment will be mainly described below with reference to FIG. 6, and descriptions of similar parts of the configuration will be omitted.

[3-1. Configuration]

[3-1-1. Overall Configuration of Head-Up Display]

FIG. 6 is a schematic diagram illustrating an optical path for describing head-up display 100 according to the third exemplary embodiment. As illustrated in FIG. 6, head-up display 100 includes display device 110 and projection optical system 120.
Projection optical system 120 includes first lens 121 having negative power, first mirror 122 having a convex reflection surface, and second mirror 124 having a concave reflection surface. Projection optical system 120 projects image to be displayed 111 displayed by display device 110 on windshield 220. Specifically, image light of image to be displayed 111 displayed by display device 110 is incident to first mirror 122 via first lens 121. The image light reflected by first mirror 122 is incident to second mirror 124. The image light reflected by second mirror 124 is projected on windshield 220.

[3-1-2. Configuration of Projection Optical System]

First lens 121 is positioned to be higher than display device 110, and has negative power as a whole. Further, first lens 121 has a negative meniscus shape having a concave incident surface facing display device 110 and a convex emitting surface. Disposition of first lens 121 in front of display device 110 can reduce an angle of a beam emitted from display device 110, which enables displaying virtual image I having excellent contrast characteristics. Further, first lens 121 has at least one free-form surface. Thus, asymmetric screen distortion that occurs at first mirror 122, second mirror 124, and windshield 220 can be corrected in an excellent manner. Further, the incident surface and the emitting surface of first lens 121 have power only in the right/left direction of the vehicle but do not have power in the upper/lower direction. As a result, even when external light such as sun light is reflected by first lens 121, the external light is not incident to viewpoint region 300.
First mirror 122 has a convex reflection surface formed by a free-form surface. First mirror 122 is positioned to be higher than first lens 121, and the reflection surface of first mirror 122 is eccentrically disposed so as to reflect a beam emitted from first lens 121 toward second mirror 124.
Second mirror 124 has a concave reflection surface formed by a free-form surface. Second mirror 124 is positioned on the front side of vehicle 200 of first lens 121, and a reflection surface of second mirror 124 is eccentrically disposed so as to reflect the beam emitted from first mirror 122 toward windshield 220.
The lower end of first mirror 122 is disposed to be positioned higher than the lower end of the reflection surface of second mirror 124. This enables head-up display 100 to have a reduced thickness in the upper/lower direction of the vehicle. Further, the length of reference beam Lc between display device 110 and first lens 121 is shorter than a length of reference beam Lc between first mirror 122 and second mirror 124. This suppresses the fluctuation of the amount of chromatic aberration that occurs at first lens 121 in viewpoint region 300.

[3-3. Effects and Others]

Head-up display 100 according to the third exemplary embodiment includes display device 110 that displays image to be displayed 111, and projection optical system 120 that projects image to be displayed 111 displayed on display device 110. Projection optical system 120 includes first lens 121, first mirror 122, and second mirror 124 in this order from display device 110 on the optical path. This configuration can realize a small head-up display in which image distortion on the entire region of viewpoint region 300 is satisfactorily corrected. That is, observer D can visually recognize excellent virtual image I at any position in viewpoint region 300.

Since the incident surface of first lens 121 is concave toward display device 110, expansion of a beam output from display device 110 and incident to first lens 121 can be suppressed, which enables presenting virtual image I having excellent contrast characteristics.

Further, first lens 121 has a negative meniscus shape having a convex emitting surface. This reduces the incident angle of a beam emitted from display device 110 to the lens surface of first lens 121, which can reduce the influence of distortion due to eccentricity.

In projection optical system 120, first lens 121 having negative power as a whole is disposed immediately after display device 110. In other words, since the surface of first lens 121, into which the light of image to be displayed 111 displayed on display device 110 is first incident, is concave, positive power of second mirror 124 can be increased, which can reduce the size of head-up display 100.

In the following, a description will be given of conditions which are desirably satisfied by head-up display 100 according to the first to third exemplary embodiments. Note that, a plurality of preferable conditions are stipulated for head-up display 100 according to the exemplary embodiments, and a configuration that satisfies all the conditions is most desirable. Nevertheless, it is also possible to obtain optical systems that exhibit respective effects by satisfying individual conditions.

The power of first lens 121 of the present disclosure is stronger in the right/left direction of the vehicle than in the upper/lower direction of the vehicle. Thus, observer D can visually recognize virtual image I having excellent contrast characteristics over the entire region of viewpoint region 300 which is set to be laterally longer.

Head-up display 100 of the present disclosure desirably satisfies the following Condition (1).

$$0.5 < H / L < 10.0 \dots (1)$$

where

H represents a length from reference outer side image end Do to reference inner side image end Di, and
L represents an optical path length of a reference beam from the display device to the incident surface of first lens 121.

Condition (1) is a condition for, as illustrated in FIG. 4, defining a ratio between a maximum lateral screen size of display device 110 (a length from reference outer side image end Do to reference inner side image end Di), and an optical path length of reference beam Lc from display device 110 to the incident surface of first lens 121. When Condition (1) is satisfied, quality of virtual image I can be enhanced and at the same time the size of head-up display 100 can be reduced. When the ratio exceeds an upper limit of Condition (1), the optical path length of reference beam Lc from display device 110 to the surface of first lens 121 on the display device 110 side becomes small, which necessitates a curvature of the surface of first lens 121 on the display device 110 side to be weakened, and thus sufficient negative power cannot be secured, and observer D becomes difficult to visually recognize virtual image I having high contrast. Further, when the emitting surface of first lens 121 is made concave to provide negative power in order to enhance the contrast, an emitting angle of a beam from the emitting surface of first lens 121 becomes large, and correcting screen distortion satisfactorily becomes difficult. When the ratio is less than a lower end in Condition (1), an interval between display device 110 and first lens 121 becomes large, and proving small-sized head-up display 100 becomes difficult.

Satisfaction of the following Condition (1)' further enhances the above effect.

$$1.0 < H / L < 6.0 \dots (1)'$$

Satisfaction of the following Condition (1)" further enhances the above effect.

$$1.3 < H / L < 4.0 \dots (1)''$$

Further, head-up display 100 of the present disclosure desirably satisfies the following Condition (2).

$$1.0 < M / L < 13.0 \dots (2)$$

where
M represents an optical path length of the reference beam from the emitting surface of first lens 121 to first mirror 122.

Conditional expression (2) is a conditional expression for defining a ratio between the optical path length of reference beam Lc from display device 110 to the incident surface of first lens 121, and the optical path length of reference beam Lc from the emitting surface of first lens 121 to first mirror 122. When Condition (2) is satisfied, the size of head-up display 100 can be reduced. When the ratio is less than a lower end of Condition (2), an interval between first lens 121 and first mirror 122 becomes small, and avoiding interference between a beam reflected by first mirror 122 and first lens 121 becomes difficult. Further, when the ratio exceeds an upper end of Condition (2), the interval between first lens 121 and first mirror 122 becomes large, and providing small-sized head-up display 100 becomes difficult.

Satisfaction of the following Condition (2)' further enhances the above effect.

$$1.3 < M / L < 7.0 \ldots (2)'$$

Further, satisfaction of the following Condition (2)" further enhances the above effect.

$$1.45 < H / L < 6.0 \ldots (2)''$$

NUMERICAL EXAMPLES

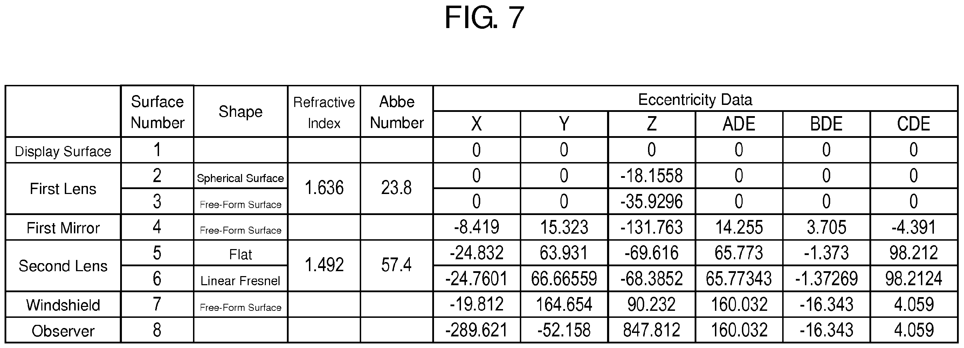

Numerical examples corresponding to the first to third exemplary embodiments will be described below with reference to FIGS. 7 to 25.

Specific example of the display device according to the present technique will be described below. In the following examples, a unit of length in tables is (mm), and a unit of angle is (degrees). Further, a free-form surface is defined by the following mathematic expression 1.

[Mathematic Expression 1]

$$z = \frac{cr^2}{1 + \sqrt{1 - (1+k)c^2 r^2}} + \sum_{m,n} C_j x^m y^n \quad (m \geq 0, n \geq 0, m + n > 0)$$

$$j = \frac{(m+n)^2 + m + 3n}{2} + 1$$

where z is a sag at position (x, y) from axes defining a surface, r is a radius of curvature at an origin on the axes defining a surface, c is a curvature at the origin on the axes defining a surface, k is a Korenich constant which corresponds to $C_1$ of the polynomial coefficient, $C_j$ (j > 1) is a coefficient of monomial $x^m y^n$, and m and n are each an integer equal to or greater than 0.

Further, in Examples, a coordinate origin being a reference is a center of an image (display surface) displayed on display device 110. In the tables, the horizontal direction in a display surface is X axis, the vertical direction in the display surface is Y axis, and the direction perpendicular to the display surface is Z axis.

Further, a toroidal surface is formed by a locus when an outline on an xz plane defined by the following mathematic expression 2 is rotated about an axis shifted to a position on the x axis separated from the origin by a radius of curvature ry.

[Mathematic Expression 2]

$$z = \frac{c_x x^2}{1 + \sqrt{1 - (1+k)c_x^2 x^2}}$$

Further, in eccentricity data, ADE refers to an amount of rotation of a mirror or a lens from a Z axis direction to a Y axis direction about the X axis; BDE refers to an amount of rotation from an X axis direction to the Z axis direction about the Y axis; and CDE refers to an amount of rotation from the X axis direction to the Y axis direction about the Z axis.

NUMERICAL EXAMPLE 1

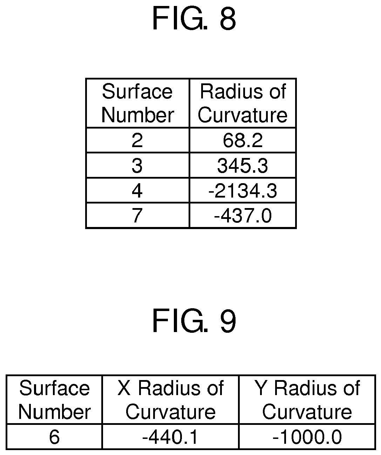

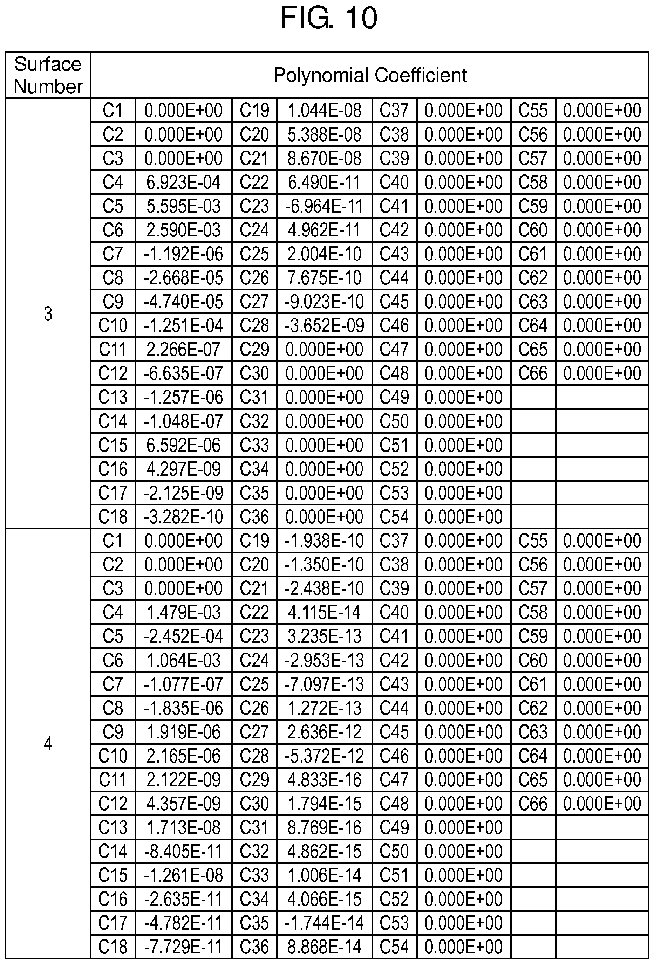

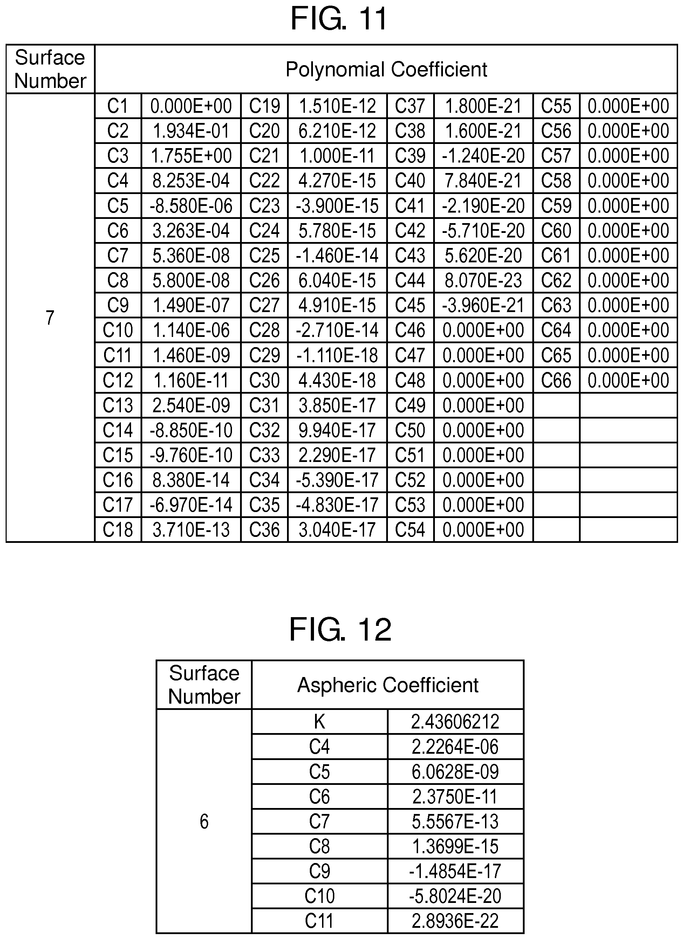

FIGS. 7 to 12 show data of the projection optical system according to Example 1 (the first exemplary embodiment). FIG. 7 shows eccentricity data at surfaces of the optical elements of projection optical system 120. FIGS. 8 and 9 show radius of curvature. FIGS. 10 and 11 show polynomial coefficients representing a shape of a free-form surface. FIG. 12 shows aspheric coefficients of the emitting surface of second lens 123.

NUMERICAL EXAMPLE 2

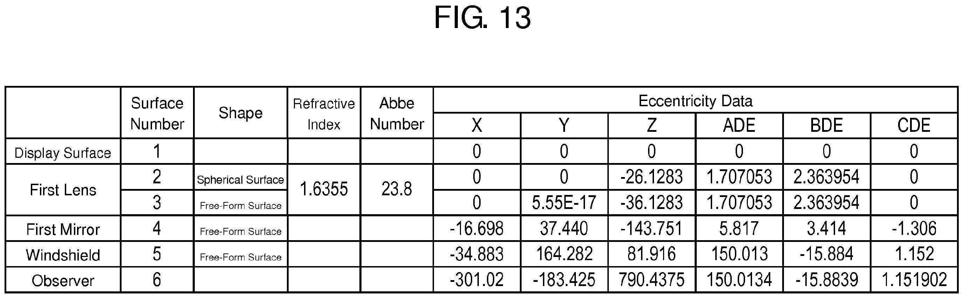

FIGS. 13 to 16 show data of the projection optical system according to Example 2 (the second exemplary embodiment). Projection optical system 120 according to Example 2 is configured by negative-power first lens 121 having a spherical incident surface having a concave shape and a convex emitting surface, and first mirror 122 having a concave reflection surface.

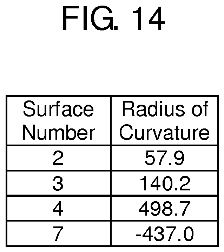

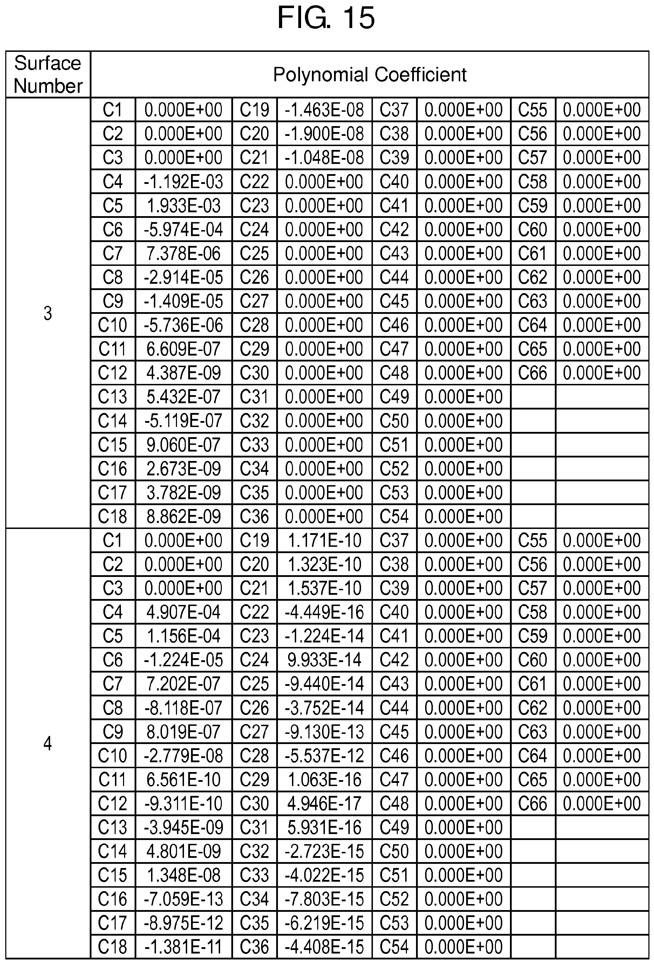

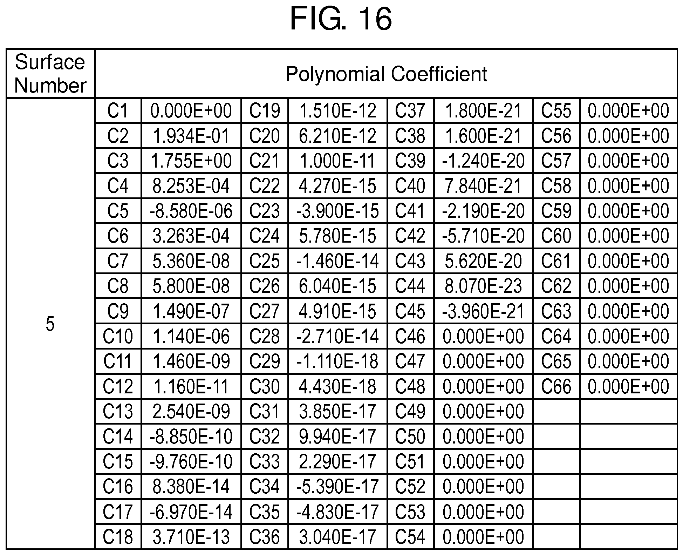

FIG. 13 shows data of the optical elements of projection optical system 120. FIG. 14 shows radius of curvature. FIGS. 15 and 16 show polynomial coefficients representing a shape of a free-form surface.

NUMERICAL EXAMPLE 3

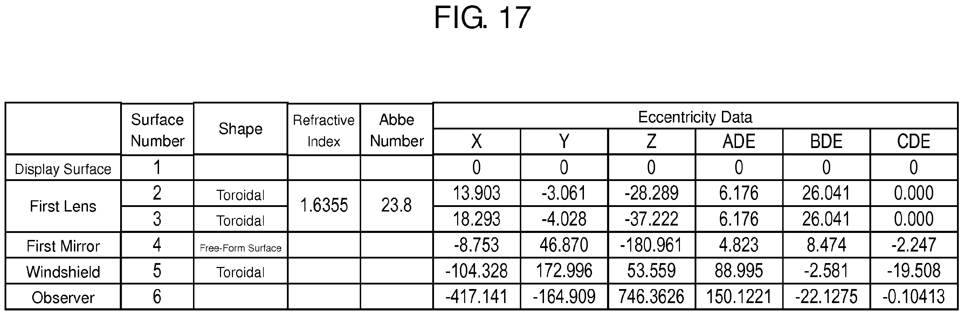

FIGS. 17 to 20 show data of the projection optical system according to Example 3 (the second exemplary embodiment). The projection optical system according to Example 3 is configured by negative-power first lens 121 and first mirror 122 having a concave reflection surface. An incident surface of first lens 121 has negative power only in a right/left direction of image to be displayed 111, and an emitting surface of first lens 121 has positive power only in the right/left direction of the image to be displayed.

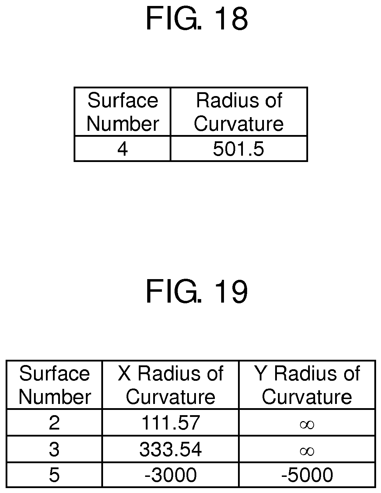

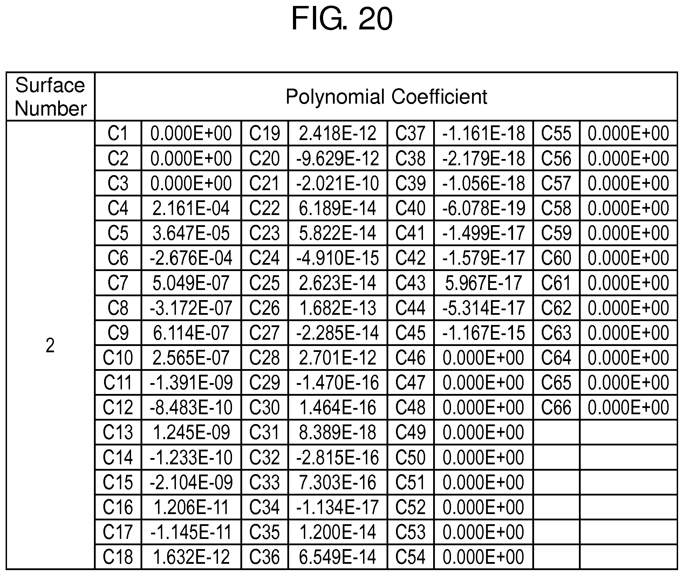

FIG. 17 shows data of the optical elements of projection optical system 120. FIGS. 18 and 19 show radius of curvature. FIG. 20 shows polynomial coefficients representing a shape of a free-form surface.

NUMERICAL EXAMPLE 4

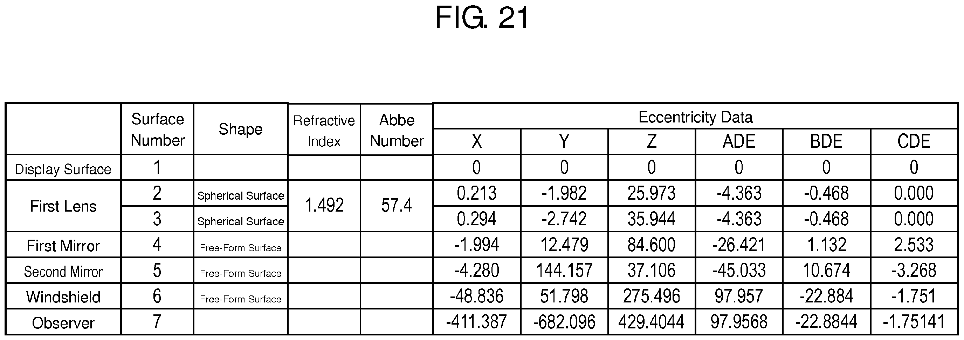

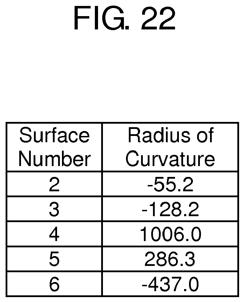

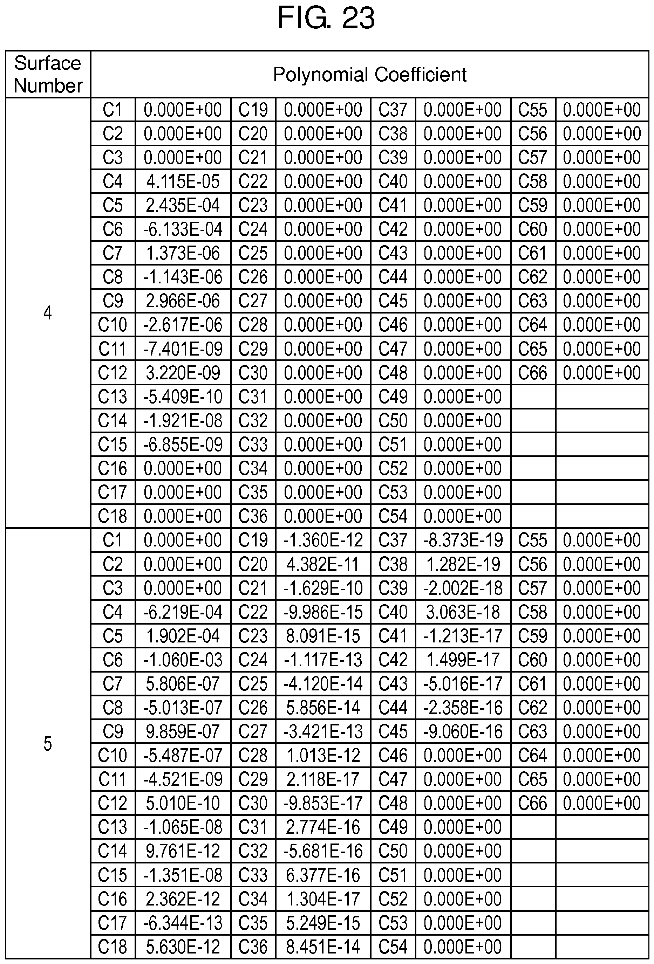

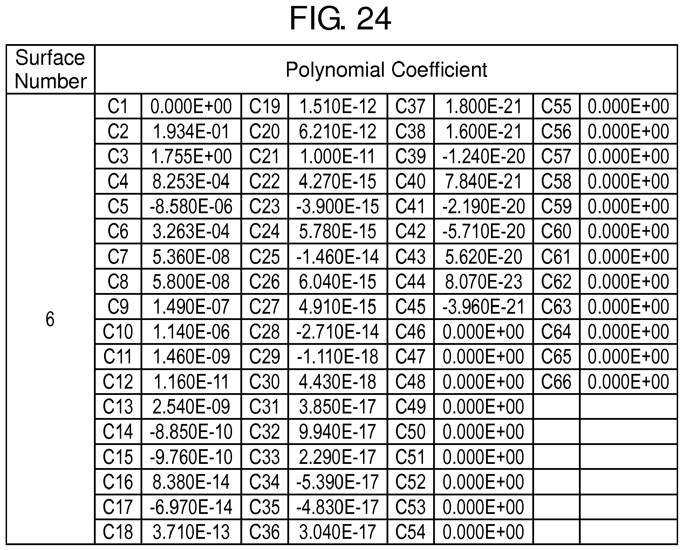

FIGS. 21 to 24 show data of the projection optical system according to Example 4 (the third exemplary embodiment). FIG. 21 shows data of the optical elements of projection optical system 120. FIG. 22 shows radius of curvature. FIGS. 23 and 24 show polynomial coefficients representing a shape of a free-form surface.

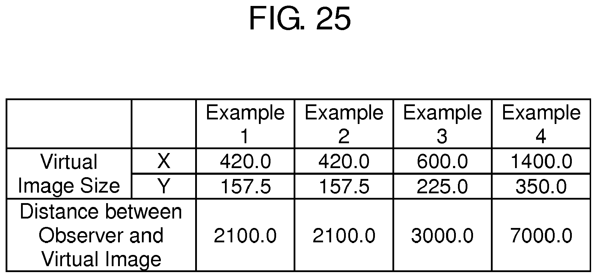

FIG. 25 shows a virtual image size and a distance between observer D and virtual image I in Examples 1 to 4.
Table 1 show corresponding values of Conditional Expressions (1) and (2) according to the first to third exemplary embodiments.

[Table 1]

|  | Example 1 | Example 2 | Example 3 | Example 4 |
|---|---|---|---|---|
| Conditional Expression (1) | 3.59 | 2.49 | 1.84 | 1.76 |
| Conditional Expression (2) | 5.29 | 4.18 | 3.06 | 1.49 |

OTHER EXEMPLARY EMBODIMENTS

As described above, the first to third exemplary embodiments have been described as illustration of the technique disclosed in this application. However, the technique of the present disclosure is not limited to the first to third exemplary embodiments, and is applicable to exemplary embodiments where modifications, replacements, additions, omissions, and the like are appropriately made. In addition, the components described in the first to third exemplary embodiments can be combined to obtain a new exemplary embodiment.

In the first to third exemplary embodiments, while first lens 121 has been described as a negative meniscus lens, first lens may have flat and concave surfaces, or both the surfaces may be concave.

In the first to third exemplary embodiments, as one example of the refractive optical system, an example where one lens element is disposed on the immediately emitting side of display device 110 has been described, but a plurality of lens elements may be disposed. When a plurality of lens elements are disposed, a surface on the display device side of a lens element, into which light emitted from the display device is first incident, is desirably concave.

In the third exemplary embodiment, the two mirrors are disposed in projection optical system 120, but three or more mirrors may be disposed or one mirror may be disposed.

As first mirror 122 in head-up display 100 according to the first exemplary embodiment, and first mirror 122 and second mirror 124 in head-up display 100 according to the second exemplary embodiment, rotationally asymmetric mirrors have been used. However, mirrors each may have a so-called saddle-shaped surface in which a symbol of a curvature differs between the X direction and the Y direction.

The surface of first lens 121 according to the first to third exemplary embodiments is not limited to a free-form surface, and may be spherical, aspheric, toroidal, or anamorphic. Alternatively, these lenses may be eccentrically disposed with respect to reference beam Lc.

The surface of first lens 121 on the display device 110 side according to the first to third exemplary embodiments does not have to be entirely concave, and may be partially concave.

The reflection surface of first mirror 122 according to the first exemplary embodiment is not limited to a free-form surface, and may be spherical, aspheric, toroidal, or anamorphic. Alternatively, these mirrors may be eccentrically disposed with respect to reference beam Lc.

The emitting surface of second lens 123 according to the first exemplary embodiment is not limited to a free-form surface, and may be spherical, aspheric, toroidal, or anamorphic. Further, second lens 123 is not limited to a linear Fresnel lens, and may be a Fresnel lens in which grooves are circularly disposed, or may be a bulk lens without any grooves.

In the first exemplary embodiment, one first mirror 122 is disposed on the emitting surface side of first lens 121, but a plurality of mirrors may be disposed. Still further, in the first exemplary embodiment, while one second lens 123 is disposed, a plurality of lens elements may be disposed, or lens elements may not be disposed.

The reflection surface of first mirror 122 in the third exemplary embodiment is convex, but may be flat or concave.

The surfaces of first mirror 122 and second mirror 124 according to the third exemplary embodiment are not limited to a free-form surface, and may be spherical, aspheric, toroidal, or anamorphic. Further, such a mirror may be eccentrically disposed with respect to reference beam Lc.

In the third exemplary embodiment, first mirror 122 is disposed on a rear side of the vehicle with respect to second mirror 124, but the present disclosure is not limited thereto. First mirror 122 may be disposed on a front side of the vehicle with respect to second mirror 124, or first mirror 122 and second mirror 124 may be disposed in the right/left direction of the vehicle (the direction perpendicular to FIG. 6).

Still further, in the third exemplary embodiment, while display device 110 is disposed to be lower than first mirror 122, the present disclosure is not limited thereto. For example, display device 110 may be disposed to be higher than first mirror 122, or may be disposed on the rear side of the vehicle with respect to first mirror 122, or display device 110 and first mirror 122 may be disposed in the right/left direction of the vehicle (the direction perpendicular to FIG. 6).

Note that, the exemplary embodiments described above are illustrations of the technique of the present disclosure. Therefore, various changes, replacements, additions, or omissions may be made to the exemplary embodiments within the scope of claims.

INDUSTRIAL APPLICABILITY

The present disclosure is applicable to a head-up display that uses a refractive optical system such as a lens. Specifically, the present disclosure is applicable to a head-up display for a vehicle.

REFERENCE MARKS IN THE DRAWINGS

100    head-up display
110    display device
111    image to be displayed

| | |
|---|---|
| 120 | projection optical system |
| 121 | first lens |
| 122 | first mirror |
| 123 | second lens |
| 124 | second mirror |
| 170 | camera |
| 200 | vehicle |
| 210 | dashboard |
| 220 | windshield |
| 300 | viewpoint region |
| D | observer |
| I | virtual image |

**Claims**

1. A head-up display (100) that is adapted to be used on a vehicle, projects an image on a transparent reflective member (220) and allows an observer (D) to visually recognize a virtual image (I), the head-up display (100) comprising:

   a display device (110) that displays the image (111); and
   a projection optical system (120) that projects the image (111) displayed on the display device (110) to a viewpoint (300) of the observer (D),
   wherein the projection optical system (120) includes

      a refractive optical system (121, 123) that includes at least one optical element (121, 123), and
      a concave mirror (122) having a concave reflection surface,

   the refractive optical system (121, 123) is positioned on an optical path (Lc) between the display device (110) and the concave mirror (122),
   the refractive optical system (121, 123) includes a lens element (121) having negative power as a whole,
   the lens element (121) having negative power has an incident surface into which light of the image (111) displayed on the display device (110) is incident,
   the incident surface has a concave surface,
   **characterized in that** the power of the lens element (121) is stronger in the right/left direction of the vehicle than in the upper/lower direction of the vehicle, and
   a following condition (1) is satisfied:

$$0.5 < H / L < 10.0 \ldots (1)$$

   where

      H represents a length from reference outer side image end (Do) to reference inner side image end (Di), and
      L represents an optical path length of a reference beam from the display device (110) to the incident surface of the lens element (121) having negative power in the refractive optical system (121, 123).

2. The head-up display (100) according to claim 1, wherein the lens element (121) having negative power is disposed adjacent to the display device (110).

3. The head-up display (100) according to claim 1, wherein the lens element (121) having negative power has a meniscus shape.

4. The head-up display (100) according to claim 1, wherein the refractive optical system (121, 123) refracts the image stronger in a long-side direction than in a short-side direction when the image (111) is transmitted.

5. The head-up display (100) according to claim 1, wherein a following condition (2) is satisfied:

$$1.0 < M / L < 13.0 \ldots (2)$$

where
M represents an optical path length of a reference beam (Lc) from an emitting surface of the refractive optical system (121, 123) to a mirror disposed next to the refractive optical system (121, 123) on the optical path (Lc).

6. The head-up display (100) according to claim 1, wherein the refractive optical system (121, 123) is disposed to be higher than a lower end of a reflection region of the concave mirror (122).

7. The head-up display (100) according to claim 1, wherein
the projection optical system (120) further includes a second mirror (124) on an optical path (Lc) from the refractive optical system (121, 123) to the concave mirror (122), and
an optical path length from the display device (110) to the refractive optical system (121, 123) is shorter than an optical path length from the second mirror (124) to the concave mirror (122).

8. A mobile body (200) mounted with the head-up display (100) according to claim 1, wherein the reflective member (220) is a windshield (220).

**Patentansprüche**

1. Headup-Anzeige (100), die ausgestaltet ist, in einem Fahrzeug verwendet zu werden, ein Bild auf ein transparentes reflektierendes Element (220) projiziert und einem Beobachter (D) erlaubt, ein virtuelles Bild (I) visuell zu erkennen, wobei die Headup-Anzeige (100) umfasst:

eine Anzeigevorrichtung (110), die das Bild (111) anzeigt, und
ein optisches Projektionssystem (120), das das auf der Anzeigevorrichtung (110) angezeigte Bild (111) auf einen Blickpunkt (300) des Beobachters (D) projiziert,
wobei das optische Projektionssystem (120) umfasst:

ein optisches Refraktivsystem (121, 123), das wenigstens ein optisches Element (121, 123) aufweist, und
einen konkaven Spiegel (122) mit einer konkaven Reflexionsoberfläche,

wobei das optische Refraktivsystem (121, 123) auf einem optischen Pfad (Lc) zwischen der Anzeigevorrichtung (110) und dem konkaven Spiegel (122) positioniert ist,
das optische Refraktivsystem (121, 123) ein Linsenelement (121) mit einer als Ganzem negativen Brechkraft aufweist,
das Linsenelement (121) mit der negativen Brechkraft eine Einfallsoberfläche aufweist, auf die Licht des Bildes (111), das auf der Anzeigevorrichtung (110) angezeigt wird, einfällt,
die Einfallsoberfläche eine konkave Oberfläche aufweist,
**gekennzeichnet dadurch, dass** die Brechkraft des Linsenelements (121) in der Rechts-/Links-Richtung des Fahrzeugs stärker ist als in der Aufwärts-/Abwärts-Richtung des Fahrzeugs und
eine folgende Bedingung (1) erfüllt ist:

$$0{,}5 < H / L < 10{,}0 \ldots(1),$$

wobei H für eine Länge von einem Referenzaußenseitenbildende (Do) zu einem Referenzinnenseitenbildende (Di) steht und L für eine optische Pfadlänge eines Referenzstrahls von der Anzeigevorrichtung (110) zu der Einfallsoberfläche des Linsenelements (121) mit negativer Brechkraft in dem optischen Refraktivsystem (121, 123) steht.

2. Headup-Anzeige (100) nach Anspruch 1, wobei das Linsenelement (121) mit negativer Brechkraft benachbart zu der Anzeigevorrichtung (110) angeordnet ist.

3. Headup-Anzeige (100) nach Anspruch 1, wobei das Linsenelement (121, 123) mit negativer Brechkraft eine Meniskusform aufweist.

4. Headup-Anzeige (100) nach Anspruch 1, wobei das optische Refraktivsystem (121, 123) das Bild in einer Längsseitenrichtung stärker bricht als in einer Breitseitenrichtung, wenn das Bild (111) übermittelt wird.

5. Headup-Anzeige (100) nach Anspruch 1, wobei eine folgende Bedingung (2) erfüllt ist:

$$1{,}0 < M / L < 13{,}0 \dots (2),$$

wobei
M für eine optische Pfadlänge eines Referenzstrahls (Lc) von einer Emissionsoberfläche des optischen Refraktionssystems (121, 123) zu einem Spiegel steht, der auf dem optischen Pfad (Lc) neben dem optischen Refraktivsysten (121, 123) angeordnet ist.

6. Headup-Anzeige (100) nach Anspruch 1, wobei das optische Refraktivsystem (121, 123) so angeordnet ist, dass es oberhalb eines unteren Endes eines Reflexionsbereichs des konkaven Spiegels (122) ist.

7. Headup-Anzeige (100) nach Anspruch 1, wobei
das optische Projektionssystem (120) ferner einen zweiten Spiegel (124) auf einem optischen Pfad (Lc) von dem optischen Refraktivsystem (121, 123) zu dem konkaven Spiegel (122) aufweist und
eine optische Pfadlänge von der Anzeigevorrichtung (110) zu dem optischen Refraktivsystem (121, 123) kürzer ist als eine optische Pfadlänge von dem zweiten Spiegel (124) zu dem konkaven Spiegel (122).

8. Mobiler Körper (200), an dem die Headup-Anzeige (100) nach Anspruch 1 angebracht ist, wobei das reflektierende Element (220) eine Windschutzscheibe (220) ist.

**Revendications**

1. Afficheur tête haute (100) qui est adapté pour être utilisé dans un véhicule, projette une image sur un élément réfléchissant transparent (220) et permet à un observateur (D) de reconnaître visuellement une image virtuelle (I), ledit afficheur tête haute (100) comprenant:

un dispositif d'affichage (110) qui affiche l'image (111), et
un système optique de projection (120) qui projette l'image (111) affichée sur le dispositif d'affichage (110), sur un point de vue (300) de l'observateur (D),
dans lequel le système optique de projection (120) comprend:

un système optique réfractif (121, 123) qui comprend au moins un élément optique (121, 123), et
un miroir concave (122) ayant une surface de réflexion concave,

le système optique réfractif (121, 123) est positionné sur un chemin optique (Lc) entre le dispositif d'affichage (110) et le miroir concave (122),
le système optique réfractif (121, 123) comprend un élément de lentille (121) ayant une puissance négative dans son ensemble,
l'élément de lentille (121) à puissance négative présente une surface d'incidence sur laquelle entre de la lumière de l'image (111) affichée sur le dispositif d'affichage (110),
la surface d'incidence présente une surface concave,
**caractérisé par le fait que** la puissance de l'élément de lentille (121) est plus forte dans la direction droite/gauche du véhicule que dans la direction vers le haut/vers le bas du véhicule,
et
une condition (1) suivante est satisfaite:

$$0{,}5 < H / L < 10{,}0 \dots (1)$$

dans laquelle

H représente une longueur allant d'une extrémité d'image de côté extérieur de référence (Do) à une extrémité d'image de côté intérieur de référence (Di), et
L représente une longueur de chemin optique d'un faisceau de référence allant du dispositif d'affichage (110) à la surface d'incidence de l'élément de lentille (121) à puissance négative dans le système optique réfractif (121, 123).

2. Afficheur tête haute (100) selon la revendication 1, dans lequel ledit élément de lentille (121) à puissance négative est disposé de manière adjacente au dispositif d'affichage (110).

3. Afficheur tête haute (100) selon la revendication 1, dans lequel ledit élément de lentille (121) à puissance négative présente une forme de ménisque.

4. Afficheur tête haute (100) selon la revendication 1, dans lequel le système optique réfractif (121, 123) réfracte l'image plus fortement dans une direction de grand côté que dans une direction de petit côté lorsque l'image (111) est transmise.

5. Afficheur tête haute (100) selon la revendication 1, dans lequel une condition (2) suivante est satisfaite:

$$1,0 < M / L < 13,0 \ldots (2)$$

dans laquelle
M représente une longueur de chemin optique d'un faisceau de référence (Lc) allant d'une surface émettrice du système optique réfractif (121, 123) à un miroir disposé à côté du système optique réfractif (121, 123) sur le chemin optique (Lc).

6. Afficheur tête haute (100) selon la revendication 1, dans lequel le système optique réfractif (121, 123) est disposé de manière à être au-dessus d'une extrémité inférieure d'une zone de réflexion du miroir concave (122).

7. Afficheur tête haute (100) selon la revendication 1, dans lequel
le système optique de projection (120) comprend en outre un deuxième miroir (124) sur un chemin optique (Lc) allant du système optique réfractif (121, 123) au miroir concave (122), et
une longueur de chemin optique allant du dispositif d'affichage (110) au système optique réfractif (121, 123) est inférieure à une longueur de chemin optique allant du deuxième miroir (124) au miroir concave (122).

8. Corps mobile (200) sur lequel est monté l'afficheur tête haute (100) selon la revendication 1, dans lequel l'élément réfléchissant (220) est un pare-brise (220).

# FIG. 1

# FIG. 2

# FIG. 3

# FIG. 4

...

# FIG. 5

# FIG. 6

## FIG. 7

| | Surface Number | Shape | Refractive Index | Abbe Number | Eccentricity Data | | | | | |
|---|---|---|---|---|---|---|---|---|---|---|
| | | | | | X | Y | Z | ADE | BDE | CDE |
| Display Surface | 1 | | | | 0 | 0 | 0 | 0 | 0 | 0 |
| First Lens | 2 | Spherical Surface | 1.636 | 23.8 | 0 | 0 | -18.1558 | 0 | 0 | 0 |
| | 3 | Free-Form Surface | | | 0 | 0 | -35.9296 | 0 | 0 | 0 |
| First Mirror | 4 | Free-Form Surface | | | -8.419 | 15.323 | -131.763 | 14.255 | 3.705 | -4.391 |
| Second Lens | 5 | Flat | 1.492 | 57.4 | -24.832 | 63.931 | -69.616 | 65.773 | -1.373 | 98.212 |
| | 6 | Linear Fresnel | | | -24.7601 | 66.66559 | -68.3852 | 65.77343 | -1.37269 | 98.2124 |
| Windshield | 7 | Free-Form Surface | | | -19.812 | 164.654 | 90.232 | 160.032 | -16.343 | 4.059 |
| Observer | 8 | | | | -289.621 | -52.158 | 847.812 | 160.032 | -16.343 | 4.059 |

EP 3 279 717 B1

# FIG. 8

| Surface Number | Radius of Curvature |
|---|---|
| 2 | 68.2 |
| 3 | 345.3 |
| 4 | -2134.3 |
| 7 | -437.0 |

# FIG. 9

| Surface Number | X Radius of Curvature | Y Radius of Curvature |
|---|---|---|
| 6 | -440.1 | -1000.0 |

# FIG. 10

| Surface Number | Polynomial Coefficient | | | | | | | |
|---|---|---|---|---|---|---|---|---|
| 3 | C1 | 0.000E+00 | C19 | 1.044E-08 | C37 | 0.000E+00 | C55 | 0.000E+00 |
| | C2 | 0.000E+00 | C20 | 5.388E-08 | C38 | 0.000E+00 | C56 | 0.000E+00 |
| | C3 | 0.000E+00 | C21 | 8.670E-08 | C39 | 0.000E+00 | C57 | 0.000E+00 |
| | C4 | 6.923E-04 | C22 | 6.490E-11 | C40 | 0.000E+00 | C58 | 0.000E+00 |
| | C5 | 5.595E-03 | C23 | -6.964E-11 | C41 | 0.000E+00 | C59 | 0.000E+00 |
| | C6 | 2.590E-03 | C24 | 4.962E-11 | C42 | 0.000E+00 | C60 | 0.000E+00 |
| | C7 | -1.192E-06 | C25 | 2.004E-10 | C43 | 0.000E+00 | C61 | 0.000E+00 |
| | C8 | -2.668E-05 | C26 | 7.675E-10 | C44 | 0.000E+00 | C62 | 0.000E+00 |
| | C9 | -4.740E-05 | C27 | -9.023E-10 | C45 | 0.000E+00 | C63 | 0.000E+00 |
| | C10 | -1.251E-04 | C28 | -3.652E-09 | C46 | 0.000E+00 | C64 | 0.000E+00 |
| | C11 | 2.266E-07 | C29 | 0.000E+00 | C47 | 0.000E+00 | C65 | 0.000E+00 |
| | C12 | -6.635E-07 | C30 | 0.000E+00 | C48 | 0.000E+00 | C66 | 0.000E+00 |
| | C13 | -1.257E-06 | C31 | 0.000E+00 | C49 | 0.000E+00 | | |
| | C14 | -1.048E-07 | C32 | 0.000E+00 | C50 | 0.000E+00 | | |
| | C15 | 6.592E-06 | C33 | 0.000E+00 | C51 | 0.000E+00 | | |
| | C16 | 4.297E-09 | C34 | 0.000E+00 | C52 | 0.000E+00 | | |
| | C17 | -2.125E-09 | C35 | 0.000E+00 | C53 | 0.000E+00 | | |
| | C18 | -3.282E-10 | C36 | 0.000E+00 | C54 | 0.000E+00 | | |
| 4 | C1 | 0.000E+00 | C19 | -1.938E-10 | C37 | 0.000E+00 | C55 | 0.000E+00 |
| | C2 | 0.000E+00 | C20 | -1.350E-10 | C38 | 0.000E+00 | C56 | 0.000E+00 |
| | C3 | 0.000E+00 | C21 | -2.438E-10 | C39 | 0.000E+00 | C57 | 0.000E+00 |
| | C4 | 1.479E-03 | C22 | 4.115E-14 | C40 | 0.000E+00 | C58 | 0.000E+00 |
| | C5 | -2.452E-04 | C23 | 3.235E-13 | C41 | 0.000E+00 | C59 | 0.000E+00 |
| | C6 | 1.064E-03 | C24 | -2.953E-13 | C42 | 0.000E+00 | C60 | 0.000E+00 |
| | C7 | -1.077E-07 | C25 | -7.097E-13 | C43 | 0.000E+00 | C61 | 0.000E+00 |
| | C8 | -1.835E-06 | C26 | 1.272E-13 | C44 | 0.000E+00 | C62 | 0.000E+00 |
| | C9 | 1.919E-06 | C27 | 2.636E-12 | C45 | 0.000E+00 | C63 | 0.000E+00 |
| | C10 | 2.165E-06 | C28 | -5.372E-12 | C46 | 0.000E+00 | C64 | 0.000E+00 |
| | C11 | 2.122E-09 | C29 | 4.833E-16 | C47 | 0.000E+00 | C65 | 0.000E+00 |
| | C12 | 4.357E-09 | C30 | 1.794E-15 | C48 | 0.000E+00 | C66 | 0.000E+00 |
| | C13 | 1.713E-08 | C31 | 8.769E-16 | C49 | 0.000E+00 | | |
| | C14 | -8.405E-11 | C32 | 4.862E-15 | C50 | 0.000E+00 | | |
| | C15 | -1.261E-08 | C33 | 1.006E-14 | C51 | 0.000E+00 | | |
| | C16 | -2.635E-11 | C34 | 4.066E-15 | C52 | 0.000E+00 | | |
| | C17 | -4.782E-11 | C35 | -1.744E-14 | C53 | 0.000E+00 | | |
| | C18 | -7.729E-11 | C36 | 8.868E-14 | C54 | 0.000E+00 | | |

# FIG. 11

| Surface Number | | Polynomial Coefficient | | | | | | |
|---|---|---|---|---|---|---|---|---|
| 7 | C1 | 0.000E+00 | C19 | 1.510E-12 | C37 | 1.800E-21 | C55 | 0.000E+00 |
| | C2 | 1.934E-01 | C20 | 6.210E-12 | C38 | 1.600E-21 | C56 | 0.000E+00 |
| | C3 | 1.755E+00 | C21 | 1.000E-11 | C39 | -1.240E-20 | C57 | 0.000E+00 |
| | C4 | 8.253E-04 | C22 | 4.270E-15 | C40 | 7.840E-21 | C58 | 0.000E+00 |
| | C5 | -8.580E-06 | C23 | -3.900E-15 | C41 | -2.190E-20 | C59 | 0.000E+00 |
| | C6 | 3.263E-04 | C24 | 5.780E-15 | C42 | -5.710E-20 | C60 | 0.000E+00 |
| | C7 | 5.360E-08 | C25 | -1.460E-14 | C43 | 5.620E-20 | C61 | 0.000E+00 |
| | C8 | 5.800E-08 | C26 | 6.040E-15 | C44 | 8.070E-23 | C62 | 0.000E+00 |
| | C9 | 1.490E-07 | C27 | 4.910E-15 | C45 | -3.960E-21 | C63 | 0.000E+00 |
| | C10 | 1.140E-06 | C28 | -2.710E-14 | C46 | 0.000E+00 | C64 | 0.000E+00 |
| | C11 | 1.460E-09 | C29 | -1.110E-18 | C47 | 0.000E+00 | C65 | 0.000E+00 |
| | C12 | 1.160E-11 | C30 | 4.430E-18 | C48 | 0.000E+00 | C66 | 0.000E+00 |
| | C13 | 2.540E-09 | C31 | 3.850E-17 | C49 | 0.000E+00 | | |
| | C14 | -8.850E-10 | C32 | 9.940E-17 | C50 | 0.000E+00 | | |
| | C15 | -9.760E-10 | C33 | 2.290E-17 | C51 | 0.000E+00 | | |
| | C16 | 8.380E-14 | C34 | -5.390E-17 | C52 | 0.000E+00 | | |
| | C17 | -6.970E-14 | C35 | -4.830E-17 | C53 | 0.000E+00 | | |
| | C18 | 3.710E-13 | C36 | 3.040E-17 | C54 | 0.000E+00 | | |

# FIG. 12

| Surface Number | Aspheric Coefficient | |
|---|---|---|
| 6 | K | 2.43606212 |
| | C4 | 2.2264E-06 |
| | C5 | 6.0628E-09 |
| | C6 | 2.3750E-11 |
| | C7 | 5.5567E-13 |
| | C8 | 1.3699E-15 |
| | C9 | -1.4854E-17 |
| | C10 | -5.8024E-20 |
| | C11 | 2.8936E-22 |

EP 3 279 717 B1

## FIG. 13

| | Surface Number | Shape | Refractive Index | Abbe Number | Eccentricity Data | | | | | |
|---|---|---|---|---|---|---|---|---|---|---|
| | | | | | X | Y | Z | ADE | BDE | CDE |
| Display Surface | 1 | | | | 0 | 0 | 0 | 0 | 0 | 0 |
| First Lens | 2 | Spherical Surface | 1.6355 | 23.8 | 0 | 0 | -26.1283 | 1.707053 | 2.363954 | 0 |
| | 3 | Free-Form Surface | | | 0 | 5.55E-17 | -36.1283 | 1.707053 | 2.363954 | 0 |
| First Mirror | 4 | Free-Form Surface | | | -16.698 | 37.440 | -143.751 | 5.817 | 3.414 | -1.306 |
| Windshield | 5 | Free-Form Surface | | | -34.883 | 164.282 | 81.916 | 150.013 | -15.884 | 1.152 |
| Observer | 6 | | | | -301.02 | -183.425 | 790.4375 | 150.0134 | -15.8839 | 1.151902 |

FIG. 14

| Surface Number | Radius of Curvature |
|---|---|
| 2 | 57.9 |
| 3 | 140.2 |
| 4 | 498.7 |
| 7 | -437.0 |

# FIG. 15

| Surface Number | Polynomial Coefficient | | | | | | | |
|---|---|---|---|---|---|---|---|---|
| 3 | C1 | 0.000E+00 | C19 | -1.463E-08 | C37 | 0.000E+00 | C55 | 0.000E+00 |
| | C2 | 0.000E+00 | C20 | -1.900E-08 | C38 | 0.000E+00 | C56 | 0.000E+00 |
| | C3 | 0.000E+00 | C21 | -1.048E-08 | C39 | 0.000E+00 | C57 | 0.000E+00 |
| | C4 | -1.192E-03 | C22 | 0.000E+00 | C40 | 0.000E+00 | C58 | 0.000E+00 |
| | C5 | 1.933E-03 | C23 | 0.000E+00 | C41 | 0.000E+00 | C59 | 0.000E+00 |
| | C6 | -5.974E-04 | C24 | 0.000E+00 | C42 | 0.000E+00 | C60 | 0.000E+00 |
| | C7 | 7.378E-06 | C25 | 0.000E+00 | C43 | 0.000E+00 | C61 | 0.000E+00 |
| | C8 | -2.914E-05 | C26 | 0.000E+00 | C44 | 0.000E+00 | C62 | 0.000E+00 |
| | C9 | -1.409E-05 | C27 | 0.000E+00 | C45 | 0.000E+00 | C63 | 0.000E+00 |
| | C10 | -5.736E-06 | C28 | 0.000E+00 | C46 | 0.000E+00 | C64 | 0.000E+00 |
| | C11 | 6.609E-07 | C29 | 0.000E+00 | C47 | 0.000E+00 | C65 | 0.000E+00 |
| | C12 | 4.387E-09 | C30 | 0.000E+00 | C48 | 0.000E+00 | C66 | 0.000E+00 |
| | C13 | 5.432E-07 | C31 | 0.000E+00 | C49 | 0.000E+00 | | |
| | C14 | -5.119E-07 | C32 | 0.000E+00 | C50 | 0.000E+00 | | |
| | C15 | 9.060E-07 | C33 | 0.000E+00 | C51 | 0.000E+00 | | |
| | C16 | 2.673E-09 | C34 | 0.000E+00 | C52 | 0.000E+00 | | |
| | C17 | 3.782E-09 | C35 | 0.000E+00 | C53 | 0.000E+00 | | |
| | C18 | 8.862E-09 | C36 | 0.000E+00 | C54 | 0.000E+00 | | |
| 4 | C1 | 0.000E+00 | C19 | 1.171E-10 | C37 | 0.000E+00 | C55 | 0.000E+00 |
| | C2 | 0.000E+00 | C20 | 1.323E-10 | C38 | 0.000E+00 | C56 | 0.000E+00 |
| | C3 | 0.000E+00 | C21 | 1.537E-10 | C39 | 0.000E+00 | C57 | 0.000E+00 |
| | C4 | 4.907E-04 | C22 | -4.449E-16 | C40 | 0.000E+00 | C58 | 0.000E+00 |
| | C5 | 1.156E-04 | C23 | -1.224E-14 | C41 | 0.000E+00 | C59 | 0.000E+00 |
| | C6 | -1.224E-05 | C24 | 9.933E-14 | C42 | 0.000E+00 | C60 | 0.000E+00 |
| | C7 | 7.202E-07 | C25 | -9.440E-14 | C43 | 0.000E+00 | C61 | 0.000E+00 |
| | C8 | -8.118E-07 | C26 | -3.752E-14 | C44 | 0.000E+00 | C62 | 0.000E+00 |
| | C9 | 8.019E-07 | C27 | -9.130E-13 | C45 | 0.000E+00 | C63 | 0.000E+00 |
| | C10 | -2.779E-08 | C28 | -5.537E-12 | C46 | 0.000E+00 | C64 | 0.000E+00 |
| | C11 | 6.561E-10 | C29 | 1.063E-16 | C47 | 0.000E+00 | C65 | 0.000E+00 |
| | C12 | -9.311E-10 | C30 | 4.946E-17 | C48 | 0.000E+00 | C66 | 0.000E+00 |
| | C13 | -3.945E-09 | C31 | 5.931E-16 | C49 | 0.000E+00 | | |
| | C14 | 4.801E-09 | C32 | -2.723E-15 | C50 | 0.000E+00 | | |
| | C15 | 1.348E-08 | C33 | -4.022E-15 | C51 | 0.000E+00 | | |
| | C16 | -7.059E-13 | C34 | -7.803E-15 | C52 | 0.000E+00 | | |
| | C17 | -8.975E-12 | C35 | -6.219E-15 | C53 | 0.000E+00 | | |
| | C18 | -1.381E-11 | C36 | -4.408E-15 | C54 | 0.000E+00 | | |

# FIG. 16

| Surface Number | Polynomial Coefficient | | | | | | | |
|---|---|---|---|---|---|---|---|---|
| 5 | C1 | 0.000E+00 | C19 | 1.510E-12 | C37 | 1.800E-21 | C55 | 0.000E+00 |
| | C2 | 1.934E-01 | C20 | 6.210E-12 | C38 | 1.600E-21 | C56 | 0.000E+00 |
| | C3 | 1.755E+00 | C21 | 1.000E-11 | C39 | -1.240E-20 | C57 | 0.000E+00 |
| | C4 | 8.253E-04 | C22 | 4.270E-15 | C40 | 7.840E-21 | C58 | 0.000E+00 |
| | C5 | -8.580E-06 | C23 | -3.900E-15 | C41 | -2.190E-20 | C59 | 0.000E+00 |
| | C6 | 3.263E-04 | C24 | 5.780E-15 | C42 | -5.710E-20 | C60 | 0.000E+00 |
| | C7 | 5.360E-08 | C25 | -1.460E-14 | C43 | 5.620E-20 | C61 | 0.000E+00 |
| | C8 | 5.800E-08 | C26 | 6.040E-15 | C44 | 8.070E-23 | C62 | 0.000E+00 |
| | C9 | 1.490E-07 | C27 | 4.910E-15 | C45 | -3.960E-21 | C63 | 0.000E+00 |
| | C10 | 1.140E-06 | C28 | -2.710E-14 | C46 | 0.000E+00 | C64 | 0.000E+00 |
| | C11 | 1.460E-09 | C29 | -1.110E-18 | C47 | 0.000E+00 | C65 | 0.000E+00 |
| | C12 | 1.160E-11 | C30 | 4.430E-18 | C48 | 0.000E+00 | C66 | 0.000E+00 |
| | C13 | 2.540E-09 | C31 | 3.850E-17 | C49 | 0.000E+00 | | |
| | C14 | -8.850E-10 | C32 | 9.940E-17 | C50 | 0.000E+00 | | |
| | C15 | -9.760E-10 | C33 | 2.290E-17 | C51 | 0.000E+00 | | |
| | C16 | 8.380E-14 | C34 | -5.390E-17 | C52 | 0.000E+00 | | |
| | C17 | -6.970E-14 | C35 | -4.830E-17 | C53 | 0.000E+00 | | |
| | C18 | 3.710E-13 | C36 | 3.040E-17 | C54 | 0.000E+00 | | |

# FIG. 17

| | Surface Number | Shape | Refractive Index | Abbe Number | Eccentricity Data | | | | | |
|---|---|---|---|---|---|---|---|---|---|---|
| | | | | | X | Y | Z | ADE | BDE | CDE |
| Display Surface | 1 | | | | 0 | 0 | 0 | 0 | 0 | 0 |
| First Lens | 2 | Toroidal | 1.6355 | 23.8 | 13.903 | -3.061 | -28.289 | 6.176 | 26.041 | 0.000 |
| | 3 | Toroidal | | | 18.293 | -4.028 | -37.222 | 6.176 | 26.041 | 0.000 |
| First Mirror | 4 | Free-Form Surface | | | -8.753 | 46.870 | -180.961 | 4.823 | 8.474 | -2.247 |
| Windshield | 5 | Toroidal | | | -104.328 | 172.996 | 53.559 | 88.995 | -2.581 | -19.508 |
| Observer | 6 | | | | -417.141 | -164.909 | 746.3626 | 150.1221 | -22.1275 | -0.10413 |

## FIG. 18

| Surface Number | Radius of Curvature |
|---|---|
| 4 | 501.5 |

## FIG. 19

| Surface Number | X Radius of Curvature | Y Radius of Curvature |
|---|---|---|
| 2 | 111.57 | ∞ |
| 3 | 333.54 | ∞ |
| 5 | -3000 | -5000 |

# FIG. 20

| Surface Number | Polynomial Coefficient | | | | | | | |
|---|---|---|---|---|---|---|---|---|
| 2 | C1 | 0.000E+00 | C19 | 2.418E-12 | C37 | -1.161E-18 | C55 | 0.000E+00 |
| | C2 | 0.000E+00 | C20 | -9.629E-12 | C38 | -2.179E-18 | C56 | 0.000E+00 |
| | C3 | 0.000E+00 | C21 | -2.021E-10 | C39 | -1.056E-18 | C57 | 0.000E+00 |
| | C4 | 2.161E-04 | C22 | 6.189E-14 | C40 | -6.078E-19 | C58 | 0.000E+00 |
| | C5 | 3.647E-05 | C23 | 5.822E-14 | C41 | -1.499E-17 | C59 | 0.000E+00 |
| | C6 | -2.676E-04 | C24 | -4.910E-15 | C42 | -1.579E-17 | C60 | 0.000E+00 |
| | C7 | 5.049E-07 | C25 | 2.623E-14 | C43 | 5.967E-17 | C61 | 0.000E+00 |
| | C8 | -3.172E-07 | C26 | 1.682E-13 | C44 | -5.314E-17 | C62 | 0.000E+00 |
| | C9 | 6.114E-07 | C27 | -2.285E-14 | C45 | -1.167E-15 | C63 | 0.000E+00 |
| | C10 | 2.565E-07 | C28 | 2.701E-12 | C46 | 0.000E+00 | C64 | 0.000E+00 |
| | C11 | -1.391E-09 | C29 | -1.470E-16 | C47 | 0.000E+00 | C65 | 0.000E+00 |
| | C12 | -8.483E-10 | C30 | 1.464E-16 | C48 | 0.000E+00 | C66 | 0.000E+00 |
| | C13 | 1.245E-09 | C31 | 8.389E-18 | C49 | 0.000E+00 | | |
| | C14 | -1.233E-10 | C32 | -2.815E-16 | C50 | 0.000E+00 | | |
| | C15 | -2.104E-09 | C33 | 7.303E-16 | C51 | 0.000E+00 | | |
| | C16 | 1.206E-11 | C34 | -1.134E-17 | C52 | 0.000E+00 | | |
| | C17 | -1.145E-11 | C35 | 1.200E-14 | C53 | 0.000E+00 | | |
| | C18 | 1.632E-12 | C36 | 6.549E-14 | C54 | 0.000E+00 | | |

# FIG. 21

| | Surface Number | Shape | Refractive Index | Abbe Number | Eccentricity Data | | | | | |
|---|---|---|---|---|---|---|---|---|---|---|
| | | | | | X | Y | Z | ADE | BDE | CDE |
| Display Surface | 1 | | | | 0 | 0 | 0 | 0 | 0 | 0 |
| First Lens | 2 | Spherical Surface | 1.492 | 57.4 | 0.213 | -1.982 | 25.973 | -4.363 | -0.468 | 0.000 |
| | 3 | Spherical Surface | | | 0.294 | -2.742 | 35.944 | -4.363 | -0.468 | 0.000 |
| First Mirror | 4 | Free-Form Surface | | | -1.994 | 12.479 | 84.600 | -26.421 | 1.132 | 2.533 |
| Second Mirror | 5 | Free-Form Surface | | | -4.280 | 144.157 | 37.106 | -45.033 | 10.674 | -3.268 |
| Windshield | 6 | Free-Form Surface | | | -48.836 | 51.798 | 275.496 | 97.957 | -22.884 | -1.751 |
| Observer | 7 | | | | -411.387 | -682.096 | 429.4044 | 97.9568 | -22.8844 | -1.75141 |

# FIG. 22

| Surface Number | Radius of Curvature |
|---|---|
| 2 | -55.2 |
| 3 | -128.2 |
| 4 | 1006.0 |
| 5 | 286.3 |
| 6 | -437.0 |

# FIG. 23

| Surface Number | Polynomial Coefficient | | | | | | | |
|---|---|---|---|---|---|---|---|---|
| 4 | C1 | 0.000E+00 | C19 | 0.000E+00 | C37 | 0.000E+00 | C55 | 0.000E+00 |
| | C2 | 0.000E+00 | C20 | 0.000E+00 | C38 | 0.000E+00 | C56 | 0.000E+00 |
| | C3 | 0.000E+00 | C21 | 0.000E+00 | C39 | 0.000E+00 | C57 | 0.000E+00 |
| | C4 | 4.115E-05 | C22 | 0.000E+00 | C40 | 0.000E+00 | C58 | 0.000E+00 |
| | C5 | 2.435E-04 | C23 | 0.000E+00 | C41 | 0.000E+00 | C59 | 0.000E+00 |
| | C6 | -6.133E-04 | C24 | 0.000E+00 | C42 | 0.000E+00 | C60 | 0.000E+00 |
| | C7 | 1.373E-06 | C25 | 0.000E+00 | C43 | 0.000E+00 | C61 | 0.000E+00 |
| | C8 | -1.143E-06 | C26 | 0.000E+00 | C44 | 0.000E+00 | C62 | 0.000E+00 |
| | C9 | 2.966E-06 | C27 | 0.000E+00 | C45 | 0.000E+00 | C63 | 0.000E+00 |
| | C10 | -2.617E-06 | C28 | 0.000E+00 | C46 | 0.000E+00 | C64 | 0.000E+00 |
| | C11 | -7.401E-09 | C29 | 0.000E+00 | C47 | 0.000E+00 | C65 | 0.000E+00 |
| | C12 | 3.220E-09 | C30 | 0.000E+00 | C48 | 0.000E+00 | C66 | 0.000E+00 |
| | C13 | -5.409E-10 | C31 | 0.000E+00 | C49 | 0.000E+00 | | |
| | C14 | -1.921E-08 | C32 | 0.000E+00 | C50 | 0.000E+00 | | |
| | C15 | -6.855E-09 | C33 | 0.000E+00 | C51 | 0.000E+00 | | |
| | C16 | 0.000E+00 | C34 | 0.000E+00 | C52 | 0.000E+00 | | |
| | C17 | 0.000E+00 | C35 | 0.000E+00 | C53 | 0.000E+00 | | |
| | C18 | 0.000E+00 | C36 | 0.000E+00 | C54 | 0.000E+00 | | |
| 5 | C1 | 0.000E+00 | C19 | -1.360E-12 | C37 | -8.373E-19 | C55 | 0.000E+00 |
| | C2 | 0.000E+00 | C20 | 4.382E-11 | C38 | 1.282E-19 | C56 | 0.000E+00 |
| | C3 | 0.000E+00 | C21 | -1.629E-10 | C39 | -2.002E-18 | C57 | 0.000E+00 |
| | C4 | -6.219E-04 | C22 | -9.986E-15 | C40 | 3.063E-18 | C58 | 0.000E+00 |
| | C5 | 1.902E-04 | C23 | 8.091E-15 | C41 | -1.213E-17 | C59 | 0.000E+00 |
| | C6 | -1.060E-03 | C24 | -1.117E-13 | C42 | 1.499E-17 | C60 | 0.000E+00 |
| | C7 | 5.806E-07 | C25 | -4.120E-14 | C43 | -5.016E-17 | C61 | 0.000E+00 |
| | C8 | -5.013E-07 | C26 | 5.856E-14 | C44 | -2.358E-16 | C62 | 0.000E+00 |
| | C9 | 9.859E-07 | C27 | -3.421E-13 | C45 | -9.060E-16 | C63 | 0.000E+00 |
| | C10 | -5.487E-07 | C28 | 1.013E-12 | C46 | 0.000E+00 | C64 | 0.000E+00 |
| | C11 | -4.521E-09 | C29 | 2.118E-17 | C47 | 0.000E+00 | C65 | 0.000E+00 |
| | C12 | 5.010E-10 | C30 | -9.853E-17 | C48 | 0.000E+00 | C66 | 0.000E+00 |
| | C13 | -1.065E-08 | C31 | 2.774E-16 | C49 | 0.000E+00 | | |
| | C14 | 9.761E-12 | C32 | -5.681E-16 | C50 | 0.000E+00 | | |
| | C15 | -1.351E-08 | C33 | 6.377E-16 | C51 | 0.000E+00 | | |
| | C16 | 2.362E-12 | C34 | 1.304E-17 | C52 | 0.000E+00 | | |
| | C17 | -6.344E-13 | C35 | 5.249E-15 | C53 | 0.000E+00 | | |
| | C18 | 5.630E-12 | C36 | 8.451E-14 | C54 | 0.000E+00 | | |

# FIG. 24

| Surface Number | Polynomial Coefficient | | | | | | | |
|---|---|---|---|---|---|---|---|---|
| 6 | C1 | 0.000E+00 | C19 | 1.510E-12 | C37 | 1.800E-21 | C55 | 0.000E+00 |
| | C2 | 1.934E-01 | C20 | 6.210E-12 | C38 | 1.600E-21 | C56 | 0.000E+00 |
| | C3 | 1.755E+00 | C21 | 1.000E-11 | C39 | -1.240E-20 | C57 | 0.000E+00 |
| | C4 | 8.253E-04 | C22 | 4.270E-15 | C40 | 7.840E-21 | C58 | 0.000E+00 |
| | C5 | -8.580E-06 | C23 | -3.900E-15 | C41 | -2.190E-20 | C59 | 0.000E+00 |
| | C6 | 3.263E-04 | C24 | 5.780E-15 | C42 | -5.710E-20 | C60 | 0.000E+00 |
| | C7 | 5.360E-08 | C25 | -1.460E-14 | C43 | 5.620E-20 | C61 | 0.000E+00 |
| | C8 | 5.800E-08 | C26 | 6.040E-15 | C44 | 8.070E-23 | C62 | 0.000E+00 |
| | C9 | 1.490E-07 | C27 | 4.910E-15 | C45 | -3.960E-21 | C63 | 0.000E+00 |
| | C10 | 1.140E-06 | C28 | -2.710E-14 | C46 | 0.000E+00 | C64 | 0.000E+00 |
| | C11 | 1.460E-09 | C29 | -1.110E-18 | C47 | 0.000E+00 | C65 | 0.000E+00 |
| | C12 | 1.160E-11 | C30 | 4.430E-18 | C48 | 0.000E+00 | C66 | 0.000E+00 |
| | C13 | 2.540E-09 | C31 | 3.850E-17 | C49 | 0.000E+00 | | |
| | C14 | -8.850E-10 | C32 | 9.940E-17 | C50 | 0.000E+00 | | |
| | C15 | -9.760E-10 | C33 | 2.290E-17 | C51 | 0.000E+00 | | |
| | C16 | 8.380E-14 | C34 | -5.390E-17 | C52 | 0.000E+00 | | |
| | C17 | -6.970E-14 | C35 | -4.830E-17 | C53 | 0.000E+00 | | |
| | C18 | 3.710E-13 | C36 | 3.040E-17 | C54 | 0.000E+00 | | |

# FIG. 25

| | | Example 1 | Example 2 | Example 3 | Example 4 |
|---|---|---|---|---|---|
| Virtual Image Size | X | 420.0 | 420.0 | 600.0 | 1400.0 |
| | Y | 157.5 | 157.5 | 225.0 | 350.0 |
| Distance between Observer and Virtual Image | | 2100.0 | 2100.0 | 3000.0 | 7000.0 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05341226 A
- US 5624493 A
- US 2009231698 A1
- GB 2498715 A
- JP 2012093506 A